# EUROPEAN PATENT APPLICATION

(11) **EP 4 606 280 A1**
(43) Date of publication of application: **27.08.2025**
(21) Application number: 23891976.5
(22) Date of filing: 14.11.2023
(51) Int. Cl.: A47J 36/02, A47J 27/00

(54) **HEATING CONTAINER USING CYLINDRICAL STANDING STRUCTURE**

(30) Priority: 15.11.2022 KR 20220152952
(71) Applicant: CJ CheilJedang Corporation, Seoul 04560 (KR)
(72) Inventor: CHOE, Juhui, Seoul 04560 (KR); SHINE, Sung Woo, Seoul 04560 (KR)
(74) Representative: Meissner Bolte Partnerschaft mbB
(86) International application number: PCT/KR2023/018267
(87) International publication number: WO 2024/106909

(57) **Abstract**

Provided is a heating container including: a body having a cylindrical shape with a first accommodation space formed therein; a cover mounted on one surface of the body, configured to open and close the body and including a through hole through which an internal space of the body fluid-communicate with an outside, and a valve provided in the through hole; and a moisture supplying portion arranged on an inner bottom surface of the body and having a second accommodation space with a volume of 1/35 to 1/25 of a volume of the first accommodation space formed therein.

## Description

### [Technical Field]

The present disclosure relates to a heating container, and more particularly, to a heating container using a cylindrical standing structure.

### [Background Art]

Contents described in this section merely provide background information for the present disclosure and do not constitute prior art.

Due to an increase in nuclear families and single-person households, various instant ready-to-eat and ready-to-cook foods have been developed according to food life patterns of modern people who prefer convenient and fast cooking, and related consumption is increasing (Lee *et al.,* 2020). Thus, the use of microwave ovens in which heating speed is high and convenient cooking can be performed, has been widely spread, and the household penetration rate of microwave ovens is 95% or more in advanced countries, including Korea.

In microwave ovens, electrical energy is converted into electronic energy by a high-frequency oscillating tube called a magnetron, and molecules with negative and positive charges in the food rotate whenever the direction of an electric field changes. The food can be heated due to frictional heat generated in the process. In other words, it means that a material that reacts to microwaves is dielectrically heated by the frictional heat generated when microwaves are irradiated on the food and are induced to vibrate.

When cooking in a microwave oven, it is affected not only by the dielectric properties of the food itself, but also by various other factors, such as size, shape, surface area/volume ratio, and specific heat. Among them, the shape and arrangement of an object to be heated are known to be very important factors in heating of microwave ovens. In the case of a spherical shape, energy tends to be concentrated in the center, and in the case of an angular shape, energy tends to be concentrated in angular parts (Ohlsson and Bengtsson, 2001).

Problems that the food is heated unevenly or a large temperature deviation inside the food occurs due to microwave oven cooking have been proposed, and there are problems that uneven heating occurs according to characteristics of the food, so that the quality or taste may be lowered. For example, when cooking frozen dumplings in a microwave oven, edges of the dumplings (joints of the skin) are overheated, which causes the dumplings to dry, results in reduced texture, and areas that are not fully cooked (cold spots) can be found. In order to improve this, consumers cook in a bag (sealed with plastic wrap) or add extra water to prevent moisture evaporation during microwave oven cooking, but there is currently no specific cooking guide therefor, and its effectiveness is also unclear.

According to the related art, envelope-shaped heating containers have been used, but the heating container itself cannot be supported, so that there is a problem that the appearance of the food to be cooked may be damaged when an object to be cooked is put into the heating container.

In order to solve the problem, polygonal column-shaped heating containers have been devised, but electromagnetic energy is concentrated on corners, and the energy is not evenly distributed through the entire inside of the heating container, so that the food is not evenly heated.

In addition, when cooking using the microwave oven, it is difficult for a user to directly measure the appropriate amount of moisture to cook the food moistly without damaging the appearance of the food.

Furthermore, most heating containers according to the related art are disposable, which is not economical and has negative effects on the environment. Moreover, reusable heating containers for solving the above problems have a complicated structure, which makes it difficult to disassemble and clean.
(Non-patent Document 1) Woo-seok LEE, Jung-wook CHOI, Hyeok-hwan SONG, Seong-hyeok KO (2020). Current status of microwave oven susceptor packaging technology development, Journal of the Korean Society of Packaging Science
(Non-patent Document 2) Ohlsson T, Bengtsson N (2001). Microwave technology and foods. Advances in Food and Nutrition Research 43, 65-104.

### [Disclosure]

### [Technical Problem]

Accordingly, the present disclosure provides a heating container having a structure in which the heating container itself can be supported with respect to a horizontal plane.

The present disclosure also provides a heating container in which electromagnetic energy can be evenly distributed inside the heating container.

The present disclosure also provides a heating container in which the appearance of an object to be cooked is not damaged without a user's separate measurement and the object to be cooked can be moistly cooked.

The present disclosure also provides a reusable heating container.

The present disclosure also provides a heating container having a simple structure that is easy to manufacture, disassemble, and clean.

The problems to be solved by the present disclosure are not limited to the problems mentioned above, and other problems not mentioned will be clearly understood by those skilled in the art from the description below.

### [Technical Solution]

According to several embodiments of the present disclosure, there is provided a heating container including: a body having a cylindrical shape with a first accommodation space formed therein; a cover mounted on one surface of the body, configured to open and close the body and including a through hole through which an internal space of the body fluid-communicate with an outside, and a valve provided in the through hole; and a moisture supplying portion arranged on an inner bottom surface of the body and having a second accommodation space with a volume of 1/35 to 1/25 of a volume of the first accommodation space formed therein.

In addition, preferably, a diameter of the body according to several embodiments of the present disclosure may be 1/1.5 to 1/2 of a height of the body, and the height of the body may be 2/3 or less of an internal height of a heating device configured to heat the heating container.

In addition, preferably, the moisture supplying portion according to a first embodiment of the present disclosure may be arranged in a center of the inner bottom surface of the body and may have a cylindrical shape.

In addition, preferably, the moisture supplying portion according to a second embodiment and a third embodiment of the present disclosure may protrude from the inner bottom surface of the body and may be formed into an annular shape along an inner circumferential surface of the body.

In addition, preferably, the body according to the second embodiment of the present disclosure may include an injection flow path formed between an inner surface of the body and an outer surface of the body, the second accommodation space may fluid-communicate with the injection flow path, and a plurality of communication holes may be formed in an upper surface of the moisture supplying portion.

In addition, preferably, an upper surface of the moisture supplying portion may be open.

In addition, preferably, the moisture supplying portion according to a fourth embodiment and a fifth embodiment of the present disclosure may be formed between an inner bottom surface of the body and an outer bottom surface of the body, and a plurality of communication holes may be formed in the inner bottom surface of the body so that the second accommodation space and the first accommodation space fluid-communicate with each other through the plurality of communication holes.

In addition, preferably, the body according to the fourth embodiment of the present disclosure may include an injection flow path formed between an inner surface of the body and an outer surface of the body, and the second accommodation space may fluid-communicate with the injection flow path.

In addition, preferably, the inner bottom surface of the body according to the fifth embodiment of the present disclosure may be formed to be removable from the body.

### [Advantageous Effects]

As described above, according to several embodiments of the present disclosure, a heating container itself can stand with respect to a horizontal plane.

In addition, according to several embodiments of the present disclosure, since the heating container has an entirely cylindrical shape, electromagnetic energy can be evenly distributed inside the heating container, and thus an object to be cooked can be evenly cooked.

In addition, according to several embodiments of the present disclosure, since the ratio of the volume of a moisture supplying portion and the volume of a body is predetermined, a user has only to fill water in the moisture supplying portion, so that an appropriate amount of moisture can be provided without separate measurement.

In addition, according to several embodiments of the present disclosure, the heating container can be reusable.

In addition, according to some embodiments, the structure of the heating container is simple, so that the manufacturing cost can be reduced and it is convenient to disassemble and clean.

### [Brief Description of the Drawings]

FIG. 1 is a perspective view of a heating container according to a first embodiment of the present disclosure;
FIG. 2 is a cross-sectional perspective view of the heating container according to the first embodiment of the present disclosure;
FIG. 3A is a cross-sectional perspective view of a heating container according to a second embodiment of the present disclosure;
FIG. 3B is a plan view of a body according to the second embodiment of the present disclosure;
FIG. 4 is a cross-sectional perspective view of the heating container according to a third embodiment of the present disclosure;
FIG. 5A is a cross-sectional perspective view of the heating container according to a fourth embodiment of the present disclosure;
FIG. 5B is a plan view of a body according to the fourth embodiment of the present disclosure; and
FIG. 6 is a cross-sectional perspective view of a heating container according to a fifth embodiment of the present disclosure.

### [Detailed Description of Preferred Embodiments]

Hereinafter, some embodiments of the present disclosure will be described in detail through exemplary drawings. When adding reference numerals to components in each drawing, it should be noted that the same components have the same reference numerals as much as possible, even if they are shown in different drawings. Also, in describing the present disclosure, if it is determined that a detailed description of a related known configuration or function may obscure the gist of the present disclosure, the detailed description will be omitted.

In describing the components of the embodiment according to the present disclosure, symbols, such as first, second, i), ii), a), and b), and the like may be used. These symbols are only used to distinguish the component from other components, and the nature, sequence, or order of the component is not limited by the symbols. In the specification, when a part is said to 'include' or 'comprise' a certain element, this means that it does not exclude other elements, but may further include other elements, unless explicitly stated to the contrary.

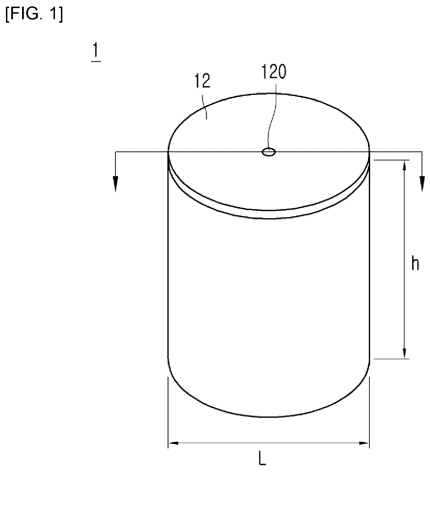

In the present disclosure, "upward" means a direction in which the height of a body increases in FIG. 1.

In addition, in the present disclosure, "downward" means a direction in which the height of the body decreases in FIG. 1.

In addition, in the present disclosure, illustration and description of some components except for main components, for example, a detailed coupled structure of a body and a cover, are omitted, but it will be noted that these components are properly provided.

### Heating Container According to First Embodiment

FIG. 1 is a perspective view of a heating container according to a first embodiment of the present disclosure.

Referring to FIG. 1, a heating container 1 according to the first embodiment of the present disclosure includes a body 10, and a cover 12 mounted on one surface of the body 10 and configured to open and close the body 10.

The body 10 is formed to have approximately a hollow column shape. Preferably, the body 10 may have a cylindrical shape with an accommodation space V1 therein. Thus, the body 10 itself may stand with respect to a horizontal plane, and cooking may be performed by putting an object to be cooked into the body 10 even though an additional support tool is not provided, so that the effect of increasing a user's convenience can be achieved. Also, since the body 10 has the cylindrical shape, energy generated by an electric field may be entirely evenly distributed without being concentrated on corners, unlike in a polygonal column shape. Thus, the effect of heating objects to be cooked arranged at the same distance from the center of the body 10 evenly by receiving the same energy can be achieved.

The height of the body 10 may be formed to be, preferably, 2/3 or less of the internal height of a microwave oven. Thus, the objects to be cooked can be arranged inside the body 10 so that a height difference between upper and lower parts of the object to be cooked is not too large, and the object to be cooked can be evenly heated in a height direction.

In this case, a diameter L of the body 10 is formed to be less than a height H of the body 10. Preferably, the diameter L of the body 10 may be 1/1.5 to 1/2 of the height H. That is, the body 10 is entirely long-formed and is not too long in a longitudinal direction so that a plurality of objects to be cooked can stand and can be cooked evenly.

The cover 12 is configured to open and close the body 10. Preferably, the cover 12 may be mounted on the opened upper surface of the body 10 having the cylindrical shape.

A through hole 120 is formed in the cover 12. The through hole 120 is formed in one side of the cover 12 so that the inside and outside of the body 10 may fluid-communicate with each other through the through hole 120. When the body 10 is heated through the through hole 120, a fluid inside the body 10 may be ejected to the outside of the body 10.

Preferably, a valve (not shown) may be provided in the through hole 120 so as to be opened under a certain pressure or more. Here, the certain pressure may mean pressure at which a vapor pressure when the inside of the body 10 is saturated, can be discharged into the atmosphere. Thus, the heating container 1 can be prevented from being blown up due to overpressure inside the heating container 1.

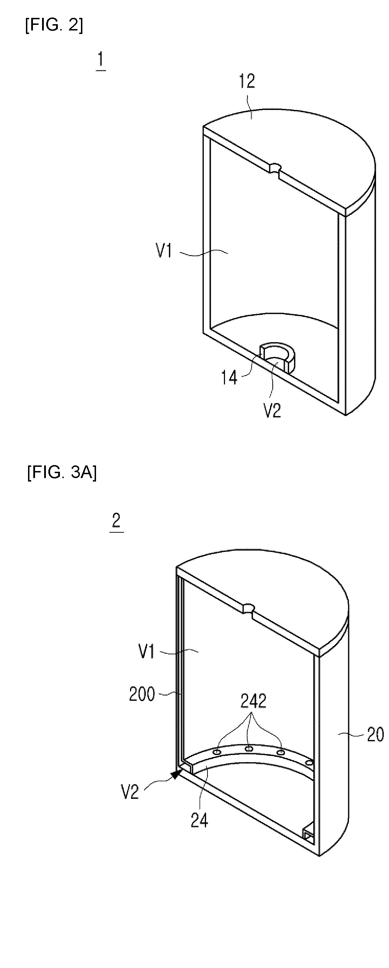

FIG. 2 is a cross-sectional perspective view of the heating container according to the first embodiment of the present disclosure.

Referring to FIG. 2, the heating container 1 according to the first embodiment of the present disclosure includes a moisture supplying portion 14 formed therein. The moisture supplying portion 14 has an accommodation space V2 in which the fluid, preferably, water may be stored.

The moisture supplying portion 14 according to the first embodiment is formed in the center of an internal bottom surface of the body 10. The center part of the body 10 is a place where the strength of concentrated electromagnetic energy is strongest. Thus, since the electromagnetic energy transferred to the moisture supplying portion 14 can be concentrated, energy directly applied to the object to be cooked can be reduced. That is, objects to be cooked are arranged to be spaced apart from the center part of the body 10, so that the effect of heating objects to be cooked evenly without heating only a part of the objects to be cooked can be achieved.

The volume of the accommodation space V2 inside the moisture supplying portion 14 is, preferably, 1/35 to 1/25 of the volume of the accommodation space V1 of the body 10. This is a value derived through an actual experiment and the volume of the moisture supplying portion 14 capable of supplying optimum moisture without affecting the appearance of the object to be cooked, i.e., a moisture content.

The actual experiment method will be described as follows.

The moisture content in each experimental example was set to 1/15, 1/25, 1/35, 1/50, and 0 (no added moisture) of the volume of the accommodation space V1, and the volume of the object to be cooked was 40% or less of the volume of the accommodation space V1 of the body 10.

The same microwave oven was used for each experimental example, and the heating container 1, in which the object to be cooked was arranged until the central temperature of the object to be cooked reached above 45 degrees Celsius, was heated in the microwave oven. In this case, the output of the microwave oven was 700 W.

In each experimental example, temperatures at five internal points of the object to be cooked after being heated were measured. The average temperature and temperature deviation of temperatures at five points were calculated.

In addition, the moisture content was measured at five points at the outermost part of a shell that surrounds the object to be cooked, the part most prone to drying. In this case, the average moisture content and moisture content deviation at five points were calculated. Meanwhile, the atmospheric pressure drying method was used to measure the moisture content.

The result of each experimental example according to the above-described experiment method is shown in [Table 1].

**[Table 1]**

| Experimental examples | Moisture supply amount (in comparison with internal volume of body) | Average temperature | Temperature deviation | Average moisture content | Moisture content deviation |
|---|---|---|---|---|---|
| Experiment 1 | 1/15 | 72.7 | 23.4 | 47.6 | 5.2 |
| Experiment 2 | 1/25 | 63.2 | 20.4 | 45.7 | 4.2 |
| Experiment 3 | 1/35 | 67.9 | 21.4 | 44.5 | 4.5 |
| Experiment 4 | 1/50 | 61.8 | 24.5 | 40.0 | 3.2 |
| Experiment 5 | 0 | 63.5 | 19.3 | 30.1 | 6.8 |

Referring to the result of Experiment 5, it was confirmed that the temperature deviation after cooking was lowest. In addition, it was confirmed that the moisture content was also lowest.

Referring to Experiments 1 through 4, it was confirmed that temperature deviation (temperature uniformity) according to moisture supply amount was similar, and in particular, it was confirmed that the average moisture contents of Experiments 1 through 3 were similar. In addition, when comparing Experiment 3 with Experiment 4, it was confirmed that, when the moisture supply amount was 1/35, the average moisture content was 10% or more or about 5% more than in the case where the moisture supply amount was 1/50. Thus, it could be known that, when the moisture supply amount was 1/35 in comparison with the entire container volume, the moisture content of the object to be cooked after heating was significantly enhanced.

As results observed together with the naked eye, when the moisture supply amount was 1/35 or more, that is, in Experiments 1 through 3, steam was fully dispersed into the microwave oven and thus it was difficult to confirm the object to be cooked, with the naked eye. It was confirmed that water accommodated in the moisture supplying portion was heated so that steam was generated, the steam was condensed into droplets due to a temperature difference with the object to be cooked, when the steam was in contact with the object to be cooked, and the object to be cooked got moist again.

Meanwhile, in Experiment 1, it was confirmed that the appearance of the object to be cooked was deformed, and this was confirmed to be due to excessive supply of moisture. In addition, the moisture content deviation in Experiment 1 was confirmed to be 25% or more than the moisture content deviation in Experiment 2. It could be known that, when the amount of moisture supplied to the inside of the body 10 was above a certain level, the appearance of the object to be cooked was changed, the object to be cooked was not evenly cooked, and cooking was concentrated on only a part of the object to be cooked. That is, it could be known that, when an appropriate amount of moisture was not supplied, it might have negative effects on the appearance and taste of the object to be cooked.

As confirmed in the above-described Experiments 1 through 5, it was confirmed that, when the moisture supply amount compared to the volume of the body was 1/35 to 1/25, the moisture of the object to be cooked was maintained, and simultaneously the appearance of the object to be cooked after cooking was properly maintained.

When a first heating container 1 is manufactured, the moisture supplying portion 14 may be sealed by an additional cover (not shown) while water is stored in the moisture supplying portion 14. Thus, the user may be ready to use the heating container 1 after removing the cover.

In addition, whenever using the heating container 1, the user may use the heating container 1 by directly injecting water into the moisture supplying portion 14, so that it is easy to use the heating container 1, and the heating container 1 can be used multiple times.

The moisture supplying portion 14 according to the first embodiment is an embodiment in which it is arranged in the center of the body 10. Meanwhile, the moisture supplying portion 14 according to second through fifth embodiments to be described later is an embodiment in which the position and shape of the moisture supplying portion 14 in the body 10 are partially modified. Hereinafter, various embodiments of a moisture supplying portion will be described.

### Heating Container According to Second Embodiment

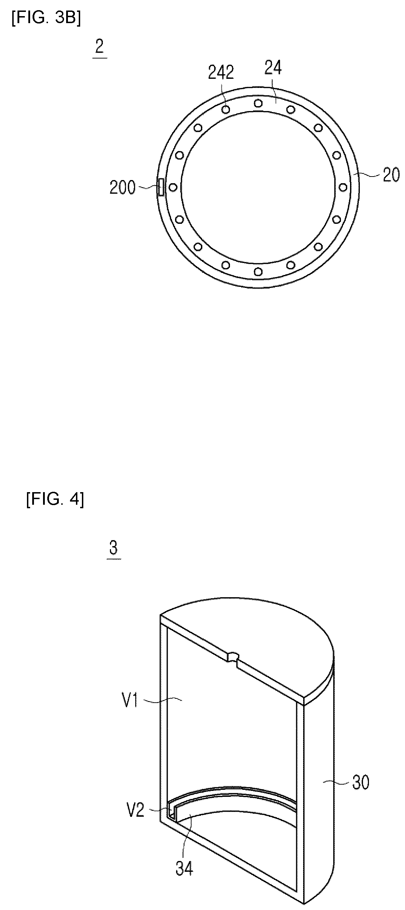

FIG. 3A is a cross-sectional perspective view of a heating container according to a second embodiment of the present disclosure. FIG. 3B is a plan view of a body according to the second embodiment of the present disclosure.

Referring to FIGS. 3A and 3B, a moisture supplying portion 24 according to the second embodiment protrudes from the inner surface of a body 20 toward the inside of the body 20. Preferably, the moisture supplying portion 24 is formed along the inner bottom circumference of the body 20 and may be formed into an annular shape overall.

An annular flow path is formed inside the moisture supplying portion 24, and water is accommodated in the flow path. The volume of an accommodation space V2 in the moisture supplying portion 24, which is formed by the flow path is 1/35 to 1/25 of the volume of the accommodation space V1 of the body 20.

A plurality of communication holes 242 are formed in an upper surface of the moisture supplying portion 24. Thus, the fluid in the accommodation space V2 may be dispersed into the body 20.

An injection flow path 200 is formed between an outer circumferential surface and an inner circumferential surface of the body 20 according to the second embodiment. The injection flow path 200 extends from the upper surface of the body 20 to the inner bottom surface of the body 20 (see FIG. 3B). Water may be supplied to the moisture supplying portion 24 through the injection flow path 200. That is, the user has only to put water into the heating container 2 through the injection flow path 200 so that the heating container 2 can be used multiple times.

The moisture supplying portion 24 according to the second embodiment is formed to surround the object to be cooked, from the outside. Thus, even when a plurality of objects to be cooked are arranged at different distances from the center of the body 20, the above-described plurality of objects to be cooked can receive sufficient moisture.

### Heating Container According to Third Embodiment

FIG. 4 is a cross-sectional perspective view of a heating container according to a third embodiment of the present disclosure.

Referring to FIG. 4, a moisture supplying portion 34 according to the third embodiment of the present disclosure protrudes from the inner surface of a body 30 toward the inside of the body 30. Preferably, the moisture supplying portion 34 is formed along the inner bottom surface of the body 30 and may be formed into an annular shape overall.

The volume of an accommodation space V2 formed inside the moisture supplying portion 34 is 1/35 to 1/25 of the volume of the accommodation space V2 of the body 30.

One surface of the moisture supplying portion 34 is formed to be open. In this case, one surface to be open is preferably an upper surface of the moisture supplying portion 34. The user may inject water into the moisture supplying portion 34 through the open surface. Thus, the heating container 3 can be used multiple times.

A heating container 3 according to the third embodiment has a comparatively simple structure, so that manufacturing cost can be reduced, and manufacturing difficulty is low. In addition, like in the second embodiment, since the moisture supplying portion 34 is configured to surround the object to be cooked, even when a plurality of objects to be cooked are irregularly arranged, appropriate moisture can be provided to all of the above-described plurality of objects to be cooked.

### Heating Container According to Fourth Embodiment

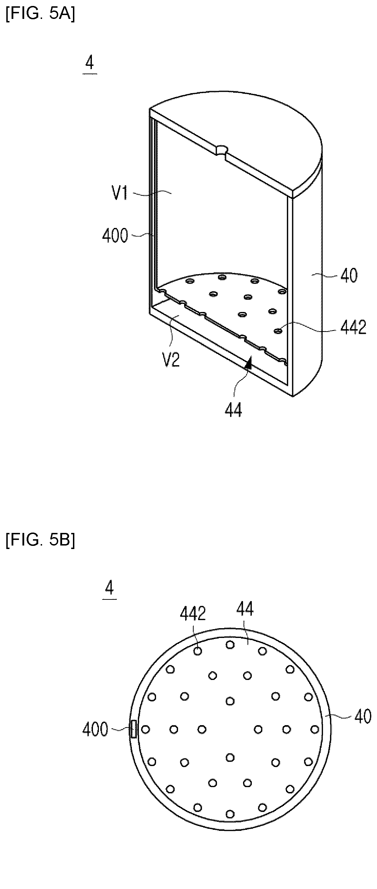

FIG. 5A is a cross-sectional perspective view of a heating container according to a fourth embodiment of the present disclosure. FIG. 5B is a plan view of a body according to the fourth embodiment of the present disclosure.

Referring to FIGS. 5A and 5B, a moisture supplying portion 44 according to the fourth embodiment is formed between an inner bottom surface and an outer bottom surface of a body 40. That is, the moisture supplying portion 44 according to the fourth embodiment is formed inside the body 40 and is a concept including a space formed under the inner bottom surface.

The volume of an accommodation space V2 inside the moisture supplying portion 44 is 1/35 to 1/25 of the volume of a first accommodation space V1 of the body 40.

A plurality of communication holes 442 are formed in an upper surface of the moisture supplying portion 44. Thus, a fluid in the accommodation space V2 may be dispersed into the body 40.

An injection flow path 400 is formed between an outer circumferential surface and an inner circumferential surface of the body 40 according to the fourth embodiment. The injection flow path 400 extends from the upper surface of the body 40 to the inner bottom surface of the body 40 (see FIG. 5B). Water may be supplied to the moisture supplying portion 44 through the injection flow path 400. That is, the user has only to put water into the heating container 4 through the injection flow path 400 so that the heating container 4 can be used multiple times.

The moisture supplying portion 44 according to the fourth embodiment is formed to supply moisture from a lower part of an object to be cooked. Thus, sufficient moisture is also supplied to the lower part of the object to be cooked in which moisture supply is relatively not smoothly performed, so that the whole of the object to be cooked can be moisturized.

### Heating Container According to Fifth Embodiment

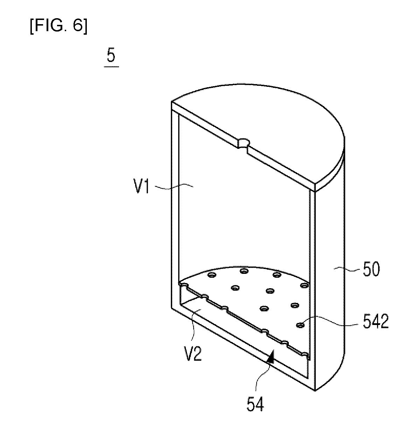

FIG. 6 is a cross-sectional perspective view of a heating container according to a fifth embodiment of the present disclosure.

Referring to FIG. 6, a moisture supplying portion 54 according to the fifth embodiment is formed between an inner bottom surface and an outer bottom surface of a body 50. That is, the moisture supplying portion 54 according to the fifth embodiment is formed inside the body 50 and is a concept including a space formed under the inner bottom surface of the body 50.

The volume of an accommodation space V2 in the moisture supplying portion 54 is 1/35 to 1/25 of the volume of the accommodation space V1 of the body 50.

A plurality of communication holes 542 are formed in an upper surface of the moisture supplying portion 54. Thus, a fluid in the accommodation space V2 may be dispersed into the body 50.

The upper surface of the moisture supplying portion 54 according to the fifth embodiment is formed to be removable from the body 50. An inner diameter of the moisture supplying portion 54 is formed to be less than the inner diameter of the body 50. Thus, even when the object to be cooked is disposed on the upper surface of the moisture supplying portion 54, the upper surface of the moisture supplying portion 54 may be stably mounted on the moisture supplying portion 54.

The user may directly inject water into the accommodation space V2 formed inside the body 50 by removing the upper surface of the moisture supplying portion 54 from the body 50 and may allow the upper surface of the moisture supplying portion 54 to be mounted on the body 50 again. That is, the heating container 5 can be easily used. In addition, the disassembling of the moisture supplying portion 54 is easy so that it is advantageous in cleaning or the like.

The moisture supplying portion 54 according to the fifth embodiment can also provide appropriate moisture to the lower part of the object to be cooked, like in the moisture supplying portion 44 according to the fourth embodiment.

In addition, the moisture supplying portion 54 according to the fifth embodiment has a simple structure, is easy to manufacture, and can reduce manufacturing cost.

The above description is merely an illustrative explanation of the technical idea of the present embodiment, and those skilled in the art will be able to make various modifications and variations without departing from the essential characteristics of the present embodiment. Accordingly, the present embodiments are not intended to limit the technical idea of the present embodiment, but rather to explain it, and the scope of the technical idea of the present embodiment is not limited by these examples. The scope of protection of the present embodiment should be interpreted in accordance with the claims below, and all technical ideas within the equivalent scope should be interpreted as being included in the scope of rights of the present embodiment.

### [Explanation of Reference Numerals]

1, 2, 3, 4, 5 : heating container
10, 20, 30, 40, 50 : body
12 : cover
14, 24, 34, 44, 54 : moisture supplying portion

## Claims

1. A heating container comprising:
a body having a cylindrical shape with a first accommodation space formed therein;
a cover mounted on one surface of the body, configured to open and close the body and comprising a through hole through which an internal space of the body fluid-communicate with an outside, and a valve provided in the through hole; and
a moisture supplying portion arranged on an inner bottom surface of the body and having a second accommodation space with a volume of 1/35 to 1/25 of a volume of the first accommodation space formed therein.

2. The heating container of claim 1, wherein a diameter of the body is 1/1.5 to 1/2 of a height of the body, and the height of the body is 2/3 or less of an internal height of a heating device configured to heat the heating container.

3. The heating container of claim 1, wherein the moisture supplying portion is arranged in a center of the inner bottom surface of the body and has a cylindrical shape.

4. The heating container of claim 1, wherein the moisture supplying portion
protrudes from the inner bottom surface of the body and is formed into an annular shape along an inner circumferential surface of the body.

5. The heating container of claim 4, wherein the body comprises an injection
flow path formed between an inner surface of the body and an outer surface of the body, the second accommodation space may fluid-communicate with the injection flow path, and a plurality of communication holes are formed in an upper surface of the moisture supplying portion.

6. The heating container of claim 4, wherein an upper surface of the moisture supplying portion is open.

7. The heating container of claim 1, wherein the moisture supplying portion is
formed between an inner bottom surface of the body and an outer bottom surface of the body, and a plurality of communication holes are formed in the inner bottom surface of the body so that the second accommodation space and the first accommodation space fluid-communicate with each other through the plurality of communication holes.

8. The heating container of claim 7, wherein the body comprises an injection
flow path formed between an inner surface of the body and an outer surface of the body, and the second accommodation space may fluid-communicate with the injection flow path.

9. The heating container of claim 7, wherein the inner bottom surface of the
body is formed to be removable from the body, and an inner diameter of the moisture supplying portion is less than an inner diameter of the body.
